# EUROPÄISCHE PATENTSCHRIFT

(11) **EP 4 515 321 B1**
(45) Veröffentlichungstag und Bekanntmachung des Hinweises auf die Patenterteilung: **02.09.2026**
(21) Anmeldenummer: 23720232.0
(22) Anmeldetag: 17.04.2023
(51) Int. Cl.: G02B 27/28, G02F 1/13357, G02B 19/00, G02B 27/01

(54) **ANZEIGEEINRICHTUNG**
DISPLAY DEVICE
DISPOSITIF D'AFFICHAGE

(30) Priorität: 27.04.2022 DE 102022204111
(43) Veröffentlichungstag der Anmeldung: 05.03.2025
(73) Patentinhaber: AUMOVIO Germany GmbH, 60488 Frankfurt am Main (DE)
(72) Erfinder: JUNGE, Christian, 30175 Hannover (DE)
(74) Vertreter: Aumovio Corporation
(86) Internationale Anmeldenummer: PCT/DE2023/200077
(87) Internationale Veröffentlichungsnummer: WO 2023/208300

(56) Entgegenhaltungen:
- JP-A- 2014 202 835
- JP-A- S63 168 626
- US-A1- 2018 299 730
- US-A1- 2021 247 646

## Beschreibung

Die vorliegende Erfindung betrifft eine Anzeigeeinrichtung aufweisend ein Anzeigepanel für linear polarisiertes Licht, als Beleuchtung eine Lichtquelle für unpolarisiertes Licht und einen Polarisationsrecycler.

Polarisationsrecycling ist eine verbreitete Methode bei Anzeigeeinrichtungen, um das unpolarisierte Licht der Beleuchtung möglichst effizient zu nutzen. Beim Polarisationsrecycling wird unpolarisiertes Licht möglichst verlustfrei in polarisiertes Licht einer gewünschten Polarisation umgewandelt. Licht der gewünschten Polarisation passiert den Polarisationsrecycler, während Licht einer dazu orthogonalen Polarisation vom Polarisationsrecycler weitgehend in Licht der gewünschten Polarisation umgewandelt wird. Nahezu das gesamte einfallende Licht verläßt den Polarisationsrecycler somit als Licht mit der gewünschten Polarisation. Verluste, wie sie mit einem herkömmlichen Polarisator auftreten, der Licht der nicht gewünschten Polarisation nicht passieren läßt sondern absorbiert oder reflektiert, werden somit vermieden. Da Anzeigeeinrichtungen in der Regel ein Anzeigepanel für linearpolarisiertes Licht aufweisen und daher polarisiertes Eingangslicht brauchen, wird oftmals Licht der nicht genutzten Polarisationsrichtung der Beleuchtung mit einem reflektiven Polarisator gefiltert und über Streuung in die richtige Polarisation konvertiert und so für das Anzeigepanel nutzbar gemacht. Diese Variante funktioniert sowohl mit Edge-Lit-Systemen, bei denen die Lichtquelle seitlich in einen Lichtleiter einstrahlt, der dann das Licht Richtung Anzeigepanel auskoppelt, also indirekt beleuchtet, als auch mit direkter Beleuchtung. Im letzteren Fall kann alternativ zur Streuung auch ein Verfahren verwendet werden bei dem mit Hilfe von polarisierenden Strahlteilern und Retarderfolien ein Polarisationsrecycling erreicht wird.

US 2005/0270439 A1 und WO 2006/038417 A1 sind Beispiele für indirekte Beleuchtung und Polarisationsrecycling mittels reflektivem Polarisator und Streuung. US 2004/0263789 A1 und US 2013/0286479 A1 sind Beispiele für direkte Beleuchtung und Polarisationsrecycling mittels polarisierendem Strahlteiler und Retarder.

Als nachteilig an den bekannten Lösungen ist anzusehen, daß der auf Streuung basierende Ansatz zu einer sehr breiten Winkelverteilung des Lichts führt, die in vielen Anwendungen, beispielsweise bei Head-Up-Displays (oft auch abgekürzt als HUD) ineffizient ist. Der Ansatz über polarisierende Strahlteiler ist technisch sehr aufwendig umzusetzen und erfordert viel Platz.

Aus US 2018/0299730 A1 ist eine Anzeigeeinrichtung aufweisend ein Anzeigepanel für linearpolarisiertes Licht, eine Lichtquelle für unpolarisiertes Licht und einen Polarisationsrecycler bekannt. Dabei weist der Polarisationsrecycler im von der Lichtquelle kommenden Strahlengang aufeinanderfolgend angeordnet eine Mikrolinsenanordnung, eine Lochmaske, die auf ihrer der Mikrolinsenanordnung abgewandten Seite reflektierend ausgebildet ist, einen Retarder, und einen reflektiven Polarisator auf.

Eine demgegenüber verbesserte Anzeigeeinrichtung mit Polarisationsrecycling wird angestrebt.

Eine erfindungsgemäße Anzeigeeinrichtung ist in Anspruch 1 angegeben. Sie weist eine Mikrolinsenanordnung auf, bei der die Mikrolinsen lückenlos angeordnet sind. Diese Mikrolinsen sind dicht an dicht angeordnet, sodaß der Übergangsbereich zwischen zwei Mikrolinsen möglichst wenig Fläche einnimmt, und im Idealfall nicht vorhanden ist. Die Lichtquelle ist eine kollimierte Lichtquelle. Durch die lückenlose Anordnung der Mikrolinsen ist gewährleistet, daß das gesamte, von der Lichtquelle kommende Licht, direkt genutzt wird. Dies vermeidet Verluste, die bei gegebenenfalls mehrfacher Reflexion des bei beanstandeten Mikrolinsen im Mikrolinsen-Zwischenraum auftreffenden und dort reflektierten Lichts auftreten können. Die Mikrolinsen fokussieren einfallendes Licht, so daß dieses die Löcher der Lochmaske passieren kann. Der vom reflektiven Polarisator reflektierte Anteil des Lichts wird vom reflektierenden Bereich der Lochmaske reflektiert und hat nach mehrmaligem, vorzugsweise zweimaligen, passieren des Retarders die für das Anzeigepanel geeignete Polarisation. Auf diese Weise ist ohne großen Aufwand ein effizientes Polarisationsrecycling ermöglicht, bei dem nahezu das gesamte von der Lichtquelle erzeugte unpolarisierte Licht als linearpolarisiertes Licht dem Anzeigepanel zugeführt wird. Als Retarder ist ein doppelbrechendes / retardierendes Element vorgesehen. Beispielsweise eine Viertelwellenlängenplatte, die linear polarisiertes Licht in zirkulare Polarisation umwandelt, wenn die Achse der Viertelwellenplatte passend ausgerichtet ist. In diesem Fall reicht zweimaliges passieren aus, um eine Drehung der Polarisationsrichtung um 90° zu erreichen. Der reflektive Polarisator ist so ausgerichtet, daß das ihn passierende Licht dieselbe Polarisationsrichtung aufweist, die das Anzeigepanel auf seiner Eingangsseige benötigt.

Erfindungsgemäß sind die Mikrolinsen der Mikrolinsenanordnung so ausgestaltet, daß sie parallele Eingangslichtstrahlen in Ausgangslichtstrahlen einer kegelförmigen Verteilung mit definiertem Öffnungswinkel umwandeln. Dies hat den Vorteil, dass eine für die Anzeigeeinrichtung gewünschte Öffnungswinkelcharakteristik bereits durch den Polarisationsrecycler bereitgestellt wird. Je nach gewünschter Öffnungswinkelcharakteristik werden Brennweite der Mikrolinsen und deren Anordnung bezüglich der Lochmaske geeignet gewählt. Die Öffnungswinkelcharakteristik bleibt auch beim Polarisationsrecycling erhalten. Die erfindungsgemäße Anordnung kann somit in Anzeigeelementen eingesetzt werden, die bereits auf parallele Eingangsstrahlen ausgelegt sind, und dort beispielsweise einen aufwendigen oder weniger effizienten Polarisationsrecycler ersetzen. In einer praktischen Umsetzung werden die Eingangsstrahlen nicht ideal parallel sein, und auch die Ausgangsstrahlen werden keinen idealen Kegel bilden. Je nach Grundfläche der Mikrolinsen, die beispielsweise rund, rechteckig, sechseckig etc. sein kann, hat auch die kegelförmige Verteilung näherungsweise einen entsprechenden Querschnitt. Bei rundem Querschnitt verbleiben auf der Mikrolinsenanordnung Zwischenbereiche zwischen den Mikrolinsen, bei denen Licht abgeblockt oder passierendes Licht nicht entsprechend der Mikrolinse gebrochen wird. Eine solche Mikrolinsenanordnung ist unter Umständen kostengünstig herstellbar und erzeugt Lichtkegel mit rundem Querschnitt, läßt aber Licht, das die Zwischenbereiche trifft, ungenutzt. Mikrolinsen mit anderem Querschnitt können dagegen flächendeckend angeordnet werden, was den Anteil des nutzbaren Lichts erhöht, geht aber auch mit Lichtkegeln entsprechenden Querschnitts einher.

Vorteilhaft weist die Mikrolinsenanordnung einen Grundkörper mit zwei im wesentlichen parallelen, in einem Abstand zueinander angeordneten Grundflächen auf, auf dessen einer Grundfläche die Mikrolinsen angeordnet sind, und auf dessen anderer Grundfläche die Lochmaske angeordnet ist. Dies hat den Vorteil, daß der Abstand der Mikrolinsen Anordnung zur Lochmaske und die relative Ausrichtung dieser beiden zueinander durch die Herstellung der Mikrolinsenanordnung gewährleistet ist. Damit ist kein nachträgliches Ausrichten dieser beiden zueinander erforderlich, Fehlerquellen sind somit reduziert. Die Lochmaske befindet sich in definiertem Abstand von den Mikrolinsen, eine aufwendige Justierung, die bei getrennt gefertigten und später zu montierenden Elementen auftreten würde, entfällt.

Gemäß einer vorteilhaften Ausgestaltung der Erfindung ist die Lochmaske in einer Fokusebene der Mikrolinsenanordnung angeordnet. Dies ermöglicht es, daß die Lochmaske sehr kleine Löcher aufweist, da der Lichtkegel in der Fokusebene im Idealfall punktförmig ist, und auch im Realfall die von den Mikrolinsen erzeugten Lichtkegel dort ihren Bereich geringsten Durchmessers haben. Kleinstmögliche Löcher bedeuten größtmögliche reflektierende Fläche, und damit geringstmögliche Lichtverluste. Nur das vom reflektierenden Polarisator reflektierte Licht, das auf die Löcher der Lochmaske trifft, steht nicht zum Polarisationsrecycling zur Verfügung. Die Lage der freien Stellen der Lochmaske, also ihrer Löcher, stimmt dabei mit den Fokuspunkten der Mikrolinsenanordnung überein.

Gemäß einer vorteilhaften Ausgestaltung der Erfindung ist die Lochmaske eine auf einer der Mikrolinsenanordnung abgewandten Seite angeordnete reflektive Beschichtung. Eine solche Beschichtung ist kostengünstig herstellbar, beispielsweise mittels eines Druckverfahrens.

Gemäß einer Weiterbildung der Erfindung ist der Grundkörper als Folie ausgebildet. Auf einer Seite der Folie befinden sich die Mikrolinsen, auf der anderen Seite ist die Lochmaske als reflektierende Beschichtung angeordnet. Diese Weiterbildung hat den Vorteil, daß derartige Folien kostengünstig und dennoch mit präzise vorgebbaren Eigenschaften herstellbar sind.

Gemäß einer Weiterbildung weist die Anzeigeeinrichtung einen transparenten Träger mit zwei im wesentlichen parallelen, in einem Abstand zueinander angeordneten Grundflächen auf, auf dessen einer Grundfläche die Lochmaske angeordnet ist, und auf dessen anderer Grundfläche der Retarder angeordnet ist. Dies ermöglicht es, den Retarder als Folie auszubilden, die zu dünn ist, um sich selbst zu stützen. Diese wird dann auf dem dickeren Träger angeordnet, beispielsweise durch Laminieren. Der Träger dient dann als Propagationstrecke. Gemäß einer vorteilhaften Variante dieser Weiterbildung sind sowohl der Retarder als auch der reflektive Polarisator auf dieser Grundfläche des Trägers angeordnet. Diese Weiterbildung hat den Vorteil, daß auch der Retarder und/oder der reflektive Polarisator in definiertem Abstand und definierter Ausrichtung zur Lochmaske angeordnet sind. Sie brauchen daher beim Einbau in die Anzeigeeinrichtung nicht zueinander ausgerichtet und justiert zu werden, und unterliegen auch im Betrieb keinen ungewollten Verschiebungen aus der justierten Position. Vorteilhafterweise wird der gesamte Polarisationsrecycler von der Mikrolinsenanordnung bis zum reflektiven Polarisator als Sandwich vorproduziert. Die Kombination der Mikrolinsenanordnung mit dem Träger erhöht die Stabilität und ermöglicht es, die Mikrolinsenanordnung besonders dünn auszulegen, auch wenn sie dann allein, ohne Verbund mit dem Träger, nicht die erforderliche Stabilität aufweisen würde.

Eine stabile Anordnung des Retarders, insbesondere wenn dieser als Folie oder als Beschichtungssystem ausgebildet ist, läßt sich vorteilhaft auch dadurch erzielen, daß der Retarder auf dem reflektiven Polarisator angeordnet, beispielsweise auflaminiert oder beschichtet, ist, ohne daß diese beiden mittels eines Trägers mit Lochmaske und Mikrolinsenanordnung verbunden sind. Dies ermöglicht es, den Abstand zwischen Lochmaske und reflektivem Polarisator noch in einem späten Produktionsstadium einzustellen, was unter bestimmten Randbedingungen erwünscht ist.

Gemäß einer Weiterbildung weisen die Mikrolinsen der Mikrolinsenanordnung eine rechteckige Apertur auf. Dies führt dazu, daß die kegelförmige Verteilung der Ausgangslichtstrahlen einen näherungsweise rechteckigen Querschnitt aufweist. Ein solcher Querschnitt ist oftmals erwünscht, beispielsweise für die Ausleuchtung der Eyebox in einem Head-Up-Display. Die kegelförmige Verteilung wird dann beispielsweise über die Öffnungswinkel ihrer kürzesten und ihrer längsten Halbachse beschrieben.

Gemäß einer Weiterbildung sind die Mikrolinsen der Mikrolinsenanordnung dezentriert angeordnet. Dies hat folgenden Vorteil: Durch die Dezentrierung ergibt sich eine globale Ablenkung des Lichtbündels. Der Polarisationsrecycler kann somit auch dafür genutzt werden, das einfallende Licht zusätzlich umzulenken. Ist die Dezentrierung der Mikrolinsen nicht konstant, sondern variabel über das Bauteil, kann auch eine globale Linsenwirkung erzielt werden, z.B. eine Zerstreuungslinse, die das Licht im Zentrum des Polarisationsrecyclers nicht ablenkt und zu den Seiten hin eine immer stärkere Ablenkung ermöglicht.

Gemäß einer alternativen Variante weist die Lochmaske Löcher auf, die in einer unregelmäßigen Struktur angeordnet sind. Jedem dieser Löcher ist dabei eine Mikrolinse mit der gleichen Linsengeometrie zugeordnet. Die Aperturen der Mikrolinse weisen jedoch ungleiche Grundflächen auf. Dies hat den Vorteil, daß die unregelmäßige Verteilung der Aperturausschnitte zu variablen Winkelverteilungen für jede Mikrolinse führen und so einen Diffusoreffekt nach sich zieht. Gemäß dieser Weiterbildung wird ein Diffusor mit Polarisationsrecycling realisiert.

Gemäß einer Ausgestaltung der Erfindung ist der reflektive Polarisator parallel zur Lochmaske ausgerichtet, sodaß der reflektive Lichtanteil durch zweifachen Durchgang durch den Retarder in der Polarisation gedreht und durch Reflektion an der Lochmaske mit dem direkt transmittierten Teil am reflektiven Polarisator überlagert wird. Dies hat den Vorteil, daß somit ein effizienzsteigerndes Polarisationsrecycling erreicht wird.

Weitere vorteilhafte Ausgestaltungen der Erfindung sind auch in der nachfolgenden Beschreibung von Ausführungsbeispielen angegeben.

### Figurenübersicht

- Fig. 1: zeigt schematisch ein Head-Up-Display gemäß dem Stand der Technik für ein Kraftfahrzeug;
- Fig. 2: zeigt schematisch eine Anzeigeeinrichtung eines Head-Up-Displays;
- Fig. 3: zeigt schematisch eine erfindungsgemäße Anzeigeeinrichtung eines Head-Up-Displays;
- Fig. 4: zeigt schematisch eine weitere erfindungsgemäße Anzeigeeinrichtung eines Head-Up-Displays;
- Fig. 5: zeigt einen Polarisationsrecycler
- Fig. 6: zeigt eine Mikrolinsenanordnung mit zentrierten Mikrolinsen
- Fig. 7: zeigt eine Mikrolinsenanordnung mit dezentrierten Mikrolinsen
- Fig.8: zeigt einen Polarisationsrecycler mit dezentrierten Mikrolinsen
- Fig.9: zeigt eine Mikrolinsenanordnung in Draufsicht.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, daß sich die Erfindung nicht auf die dargestellten Ausführungsformen beschränkt und daß die beschriebenen Merkmale auch kombiniert oder modifiziert werden können, ohne den Schutzbereich der Erfindung zu verlassen, wie er in den angehängten Ansprüchen definiert ist.

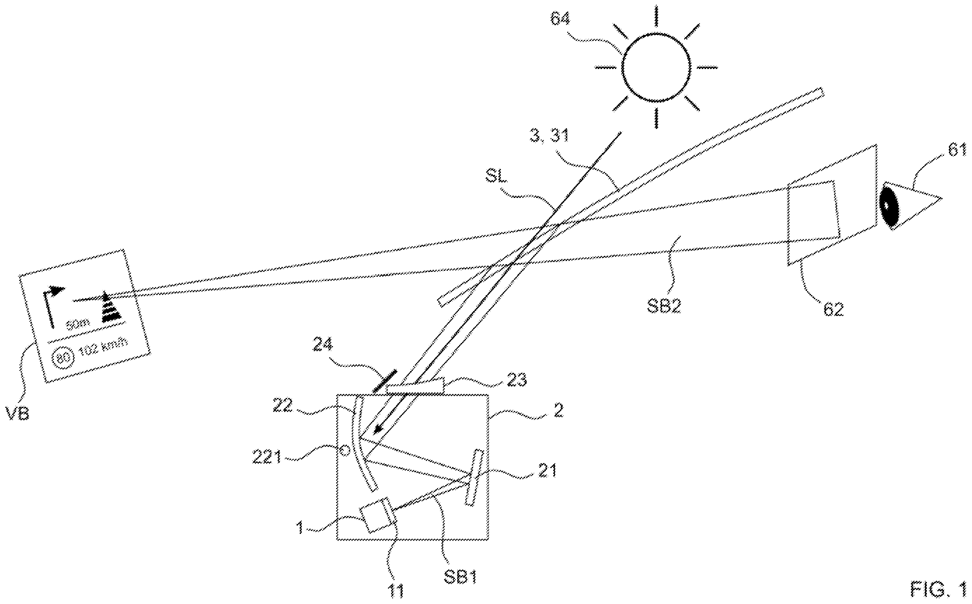

Fig. 1 zeigt eine Prinzipskizze eines Head-Up-Displays für ein Kraftfahrzeug gemäß dem Stand der Technik. Das Head-Up-Display weist eine Anzeigeeinrichtung 1, eine Optikeinheit 2 und eine Spiegeleinheit 3 auf. Von einem Anzeigepanel 11 geht ein Strahlenbündel SB1 aus, welches von einem ersten Spiegel 21 auf einen gekrümmten Spiegel 22 reflektiert wird, der es Richtung Spiegeleinheit 3 reflektiert. Die Spiegeleinheit 3 ist hier als Windschutzscheibe 31 eines Kraftfahrzeugs dargestellt. Von dort gelangt das Strahlenbündel SB2 in Richtung eines Auges 61 eines Betrachters.

Der Betrachter sieht ein virtuelles Bild VB, welches sich außerhalb des Kraftfahrzeugs oberhalb der Motorhaube oder sogar vor dem Kraftfahrzeug befindet. Durch das Zusammenwirken von Optikeinheit 2 und Spiegeleinheit 3 ist das virtuelle Bild VB eine vergrößerte Darstellung des vom Anzeigepanel 11 angezeigten Bildes. Hier sind symbolisch eine Geschwindigkeitsbegrenzung, die aktuelle Fahrzeuggeschwindigkeit sowie Navigationsanweisungen dargestellt. So lange sich das Auge 61 innerhalb der durch ein Rechteck angedeuteten Eyebox 62 befindet, sind alle Elemente des virtuellen Bildes für das Auge 61 sichtbar. Befindet sich das Auge 61 außerhalb der Eyebox 62, so ist das virtuelle Bild VB für den Betrachter nur noch teilweise oder gar nicht sichtbar. Je größer die Eyebox 62 ist, desto weniger eingeschränkt ist der Betrachter bei der Wahl seiner Sitzposition.

Die Krümmung des gekrümmten Spiegels 22 ist an die Krümmung der Windschutzscheibe 31 angepaßt und sorgt dafür, daß die Bildverzeichnung über die gesamte Eyebox 62 stabil ist. Der gekrümmte Spiegel 22 ist mittels einer Lagerung 221 drehbar gelagert. Die dadurch ermöglichte Drehung des gekrümmten Spiegels 22 ermöglicht ein Verschieben der Eyebox 62 und somit eine Anpassung der Position der Eyebox 62 an die Position des Auges 61. Der erste Spiegel 21 dient dazu, daß der vom Strahlenbündel SB1 zurückgelegte Weg zwischen Anzeigepanel 11 und gekrümmtem Spiegel 22 lang ist, und gleichzeitig die Optikeinheit 2 dennoch kompakt ausfällt. Die Optikeinheit 2 wird durch eine transparente Abdeckung 23 gegen die Umgebung abgegrenzt. Die optischen Elemente der Optikeinheit 2 sind somit beispielsweise gegen im Innenraum des Fahrzeugs befindlichen Staub geschützt. Ein Blendschutz 24 dient dazu, das über die Grenzfläche der Abdeckung 23 reflektierte Licht sicher zu absorbieren, sodaß keine Blendung des Betrachters hervorgerufen wird. Außer dem Sonnenlicht SL kann auch das Licht einer anderen Störlichtquelle 64 auf das Anzeigepanel 11 gelangen.

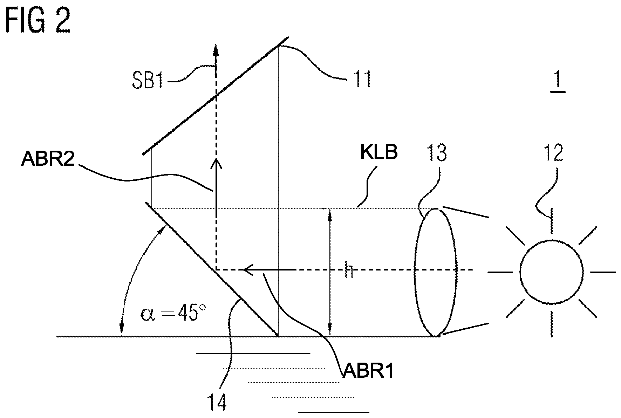

Fig. 2 zeigt schematisch die Anzeigeeinrichtung 1 eines Head-Up-Displays. Man erkennt die Lichtquelle 12, deren Licht von einem Kollimator 13 kollimiert wird. Das kollimierte Lichtbündel KLB weist in der Bildebene eine Höhe h in Richtung senkrecht zu seiner Ausbreitungsrichtung ABR1 auf. Es wird von einem im Winkel von α=45° zur Ausbreitungsrichtung ABR1 angeordneten Spiegel 14 reflektiert und durchleuchtet in seiner im Winkel von 90° zur Ausbreitungsrichtung ABR1 ausgerichteten Ausbreitungsrichtung ABR2 das Anzeigepanel 11, von wo aus es als Strahlenbündel SB1 in die hier nicht dargestellte Optikeinheit 2 eintritt. Das Anzeigepanel 11 ist nicht rechtwinklig zur Ausbreitungsrichtung ABR2 angeordnet, sondern in einem von 90° abweichenden Winkel, der hier besonders stark von 90° abweichend dargestellt ist. Die Verwendung des Spiegels 14 reduziert die Bauhöhe in Ausbreitungsrichtung ABR2. In anderen Ausführungsformen wird auf einen solchen Spiegel verzichtet, die beiden Ausbreitungsrichtungen ABR1 und ABR2 fallen dann zusammen.

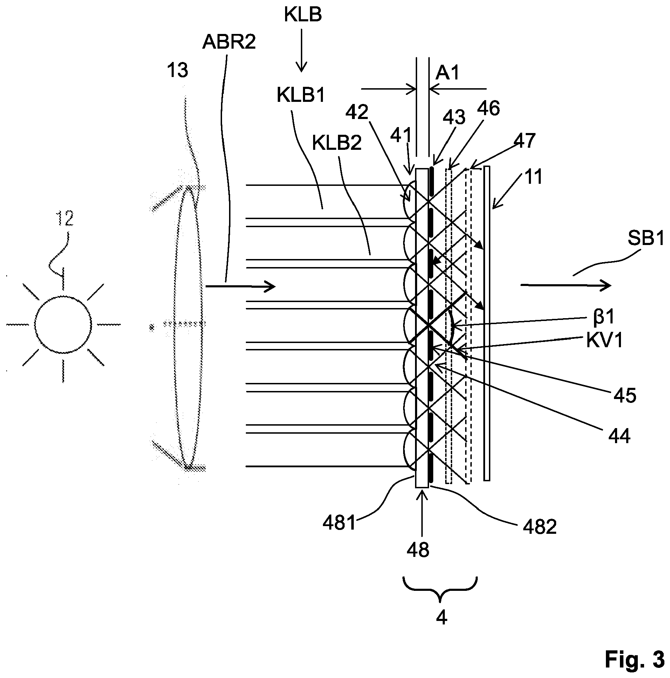

Fig. 3 zeigt schematisch eine erfindungsgemäße Anzeigeeinrichtung 1 eines Head-Up-Displays. Man erkennt links die Lichtquelle 12, gefolgt von einem Kollimator 13, der ein kollimiertes Lichtbündel KLB mit parallelen Lichtstrahlen erzeugt. Mehrere Teilstrahlenbündel KLB1, KLB2, ... des kollimierten Lichtbündels KLB sind hier gezeigt. Das kollimierte Lichtbündel KLB trifft auf einen Polarisationsrecycler 4 und verläßt diesen als linearpolarisiertes Licht, welches auf das Anzeigepanel 11 trifft, von diesem eine Bildinformation aufgeprägt bekommt, und dieses als Strahlenbündel SB 1 verläßt.

Der Polarisationsrecycler 4 weist eine Mikrolinsenanordnung 41 auf, die aus vielen Mikrolinsen 42 besteht. Die Mikrolinsen sind als Sammellinsen ausgeführt. Der Mikrolinsenanordnung 41 in Strahlrichtung nachgeordnet befindet sich eine Lochmaske 43. Diese ist auf ihrer der Mikrolinsenanordnung 41 abgewandten Seite 45 reflektierend ausgebildet. Der Lochmaske 43 in Strahlrichtung nachgeordnet befindet sich ein Retarder 46. Er ist beispielsweise als Viertelwellenplatte ausgeführt. Auch andere Verzögerungselemente, die die Polarisation und die Phase von Licht verzögern bzw. verändern, können als Retarder 46 vorgesehen sein. Dem Retarder 46 in Strahlrichtung nachgeordnet befindet sich ein reflektiver Polarisator 47. Der Polarisationsrecycler 4 weist somit die Elemente Mikrolinsenanordnung 41, Lochmaske 43, Retarder 46 und reflektiver Polarisator 47 auf. Die Mikrolinsenanordnung 41 befindet sich auf einer ersten Grundfläche 481 eines Grundkörpers 48, auf dessen zweiter Grundfläche 482 die Lochmaske 43 angeordnet ist. Der Grundkörper 48 ist transparent und besteht vorzugsweise aus demselben Material wie die Mikrolinsen 42. In einer vorteilhaften Ausgestaltung sind die Mikrolinsen 42 einstückig mit dem Grundkörper 48 ausgeführt. Gemäß einer anderen Variante ist der Grundkörper 48 ein Glassubstrat und die Mikrolinsen 42 sind mit einem Nanoimprintingverfahren auf das Glassubstrat aufgebracht. Die Grundflächen 481, 482 weisen einen Abstand A1 voneinander auf, der der Brennweite der Mikrolinsen 42 entspricht. In einer vorteilhaften Ausgestaltung ist der Grundkörper 48 eine Folie, auf deren erster Grundfläche 481 Mikrolinsen eingeprägt sind, und auf deren zweiter Grundfläche 482 eine mit Löchern 44 versehene reflektive Beschichtung aufgebracht ist.

Man erkennt, daß die Mikrolinsen 42 der Mikrolinsenanordnung 41 lückenlos angeordnet sind. Jede der Mikrolinsen 42 wandelt die parallelen Eingangslichtstrahlen des auf sie treffenden kollimierten Lichtbündels KLBx (x=1,2,...) in Ausgangslichtstrahlen um, die eine kegelförmige Verteilung KV1 aufweisen. Die kegelförmige Verteilung KV1 hat einen Öffnungswinkel β1. Die Eingangslichtstrahlen werden fokussiert, wobei die Fokusebene der Ausgangslichtstrahlen in der Ebene der Lochmaske 43 liegt. Die Ausgangslichtstrahlen passieren den Retarder 46. Da die Ausgangslichtstrahlen wie auch die Eingangslichtstrahlen keine bevorzugte Polarisation aufweisen, weisen sie auch nach Durchlaufen des Retarders 46 keine bevorzugte Polarisation auf. Beim Auftreffen auf den reflektiven Polarisator 47 passiert diesen nur derjenige Anteil, der entsprechend dem reflektiven Polarisator 47 ausgerichtet ist, während der senkrecht dazu polarisierte Anteil reflektiert wird. Der reflektierte Anteil passiert den Retarder 46, wird von der reflektierenden Seite 45 der Lochmaske 43 reflektiert und passiert den Retarder 46 erneut. Nach diesem zweimaligen Durchlaufen des Retarders 46 ist die Polarisationsrichtung um 90° gedreht, sodaß der reflektive Polarisator 47 nun passiert wird. Somit wird das ursprünglich vom reflektiven Polarisator 47 reflektierte Licht bis auf den Anteil, der auf die Löcher 44 der Lochmaske 43 trifft, in seiner Polarisation gedreht und polarisationsrichtig dem Anzeigepanel 11 zugeführt. Dieses ist ein für linearpolarisiertes Licht vorgesehenes Anzeigepanel 11, beispielsweise eine Flüssigkristallanzeige (LCD: Liquid Crystal Display). Der Abstand zwischen der Lochmaske 43 und dem reflektiven Polarisator 47 is so gewählt, dass das vom Strahlenbündel KV1 zurück reflektierte Teil beim Auftreffen auf die reflektive Seite 45 der Lochmaske 43 einen Durchmesser vergleichbar mit den den Mikrolinsen 42 hat, so daß das Verhältnis von beleuchteter beschichteter Fläche und Lochdurchmesser der Lochmaske 43 möglichst groß ist. Das Strahlenbündel SB1, welches das Anzeigepanel 11 in der Abbildung nach rechts verläßt, weist die von den Mikrolinsen 42 vorgegebene kegelförmige Verteilung KV1 auf. Die Transmissionsachse des reflektiven Polarisators ist dabei so ausgerichtete, daß die Polarisation des transmittierten Lichts auf die Polarisationsachse des Anzeigepanels 11 ausgerichtet ist. Reflektiert wird Licht der entsprechend senkrechten Polarisation.

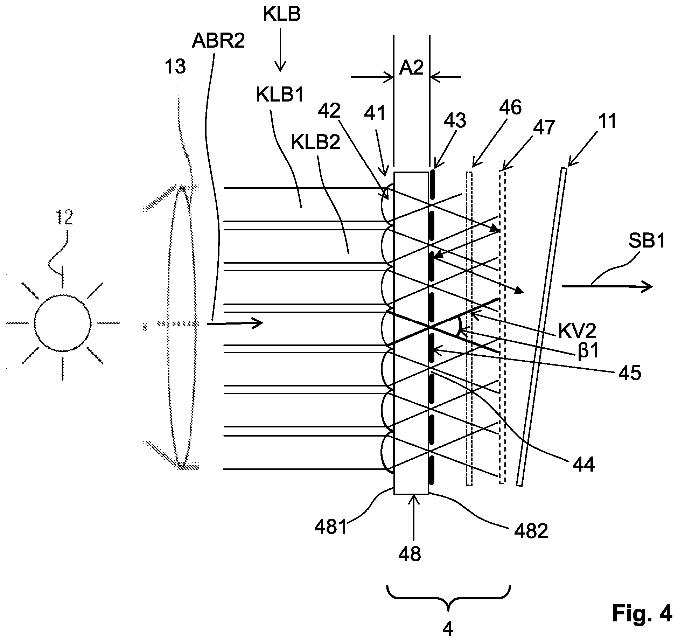

Fig. 4 zeigt schematisch eine weitere Ausführungsform einer erfindungsgemäßen Anzeigeeinrichtung eines Head-Up-Displays. Diese entspricht im wesentlichen derjenigen zu Fig.3 dargestellten, wobei die Mikrolinsen 42 eine andere Brennweite aufweisen. Der Abstand A2 zwischen erster Grundfläche 481 und zweiter Grundfläche 482 ist deswegen größer als zur vorhergehenden Abbildung gezeigt. Damit ergibt sich für die kegelförmige Verteilung KV2 auch ein anderer Öffnungswinkel β2. So kann durch Veränderung der Brennweite der Mikrolinsen 42 und des Abstandes A2 eine kegelförmige Verteilung KV mit gewünschtem Öffnungswinkel β eingestellt werden.

Das Anzeigepanel 11 ist in dieser Ausführungsform in einem von 90° abweichenden Winkel zur Ausbreitungsrichtung ABR 2 des Lichts dargestellt. Eine solche Anordnung ist insbesondere bei bestimmten Anwendungsfällen, beispielsweise im Head-Up-Display, bevorzugt.

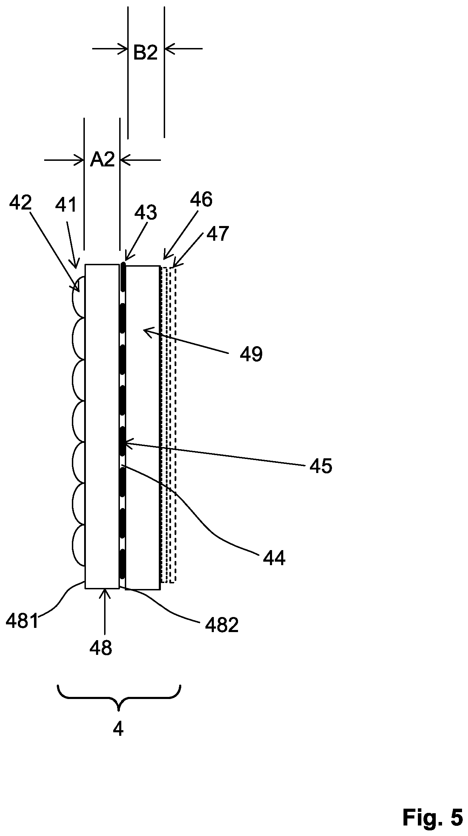

Fig.5 zeigt einen Polarisationsrecycler 4 entsprechend dem zu Fig.4 gezeigten, der allerdings einstückig ausgeführt ist. Die Mikrolinsenanordnung 41 ist, wie zuvor beschrieben, an einer ersten Grundfläche 481 eines Grundkörpers 48 angeordnet. An der anderen Grundfläche 482 des Grundkörpers 48 befindet sich die Lochmaske 43. Auf der dem Grundkörper 48 abgewandten Seite der Lochmaske 43 ist diese mit einem Träger 49 verbunden. Auf der anderen Grundfläche des Trägers 49 ist der Retarder 46 angeordnet, an den sich der reflektive Polarisator 47 anschließt. Der Träger 49 weist eine Dicke B2 auf. In dem hier gezeigten Ausführungsbeispiel sind alle Elemente des Polarisationsrecyclers 4 zu einem sandwichartigen Bauteil verbunden. Andere, hier nicht gezeigte Ausführungsvarianten sehen vor, daß nicht alle diese Elemente miteinander verbunden sind. In einer Variante sind beispielsweise der Retarder 46 und der reflektive Polarisator 47 miteinander verbunden, und die Mikrolinsenanordnung 41 mit dem Grundkörper 48 und der Lochmaske 43. Diese beiden Baugruppen sind voneinander beabstandet angeordnet, aber nicht flächig miteinander verbunden. Auf einen Träger 49 wird in dieser Variante verzichtet. Eine andere Variante sieht vor, daß der Träger 49 entweder mit dem Retarder 46 oder mit der Lochmaske 43 flächig verbunden, zu dem jeweiligen anderen Bauteil aber beabstandet angeordnet ist. In diesem Fall trägt der Träger 49 zur erhöhten Stabilität des jeweils flächig mit ihm verbundenen Bauteils bei.

Gemäß einer hier nicht dargestellten Abwandlung ist der Retarder 46 direkt auf der Lochmaske 43 angeordnet, vorzugsweise auflaminiert. Der reflektive Polarisator 47 ist dann im Abstand zum Retarder 46 angeordnet. Auch hier ist gemäß einer Variante ein Träger 49 zwischen Retarder 46 und reflektivem Polarisator 47 angeordnet. Gemäß einer anderen Variante befindet sich lediglich eine Luftschicht zwischen diesen beiden. Die Befestigung und Ausrichtung der nicht flächig miteinander verbundenen Elemente erfolgt dann mittels hier nicht dargestellter außen angeordneter Elemente, beispielsweise mittels Gehäuseelementen. Der Träger 49 kann auch als transparente optische Folie ausgelegt sein, dessen Dicke B2 im Vergleich zum Abstand A2 der Grundflächen 481,482 wesentlich geringer ist als hier dargestellt.

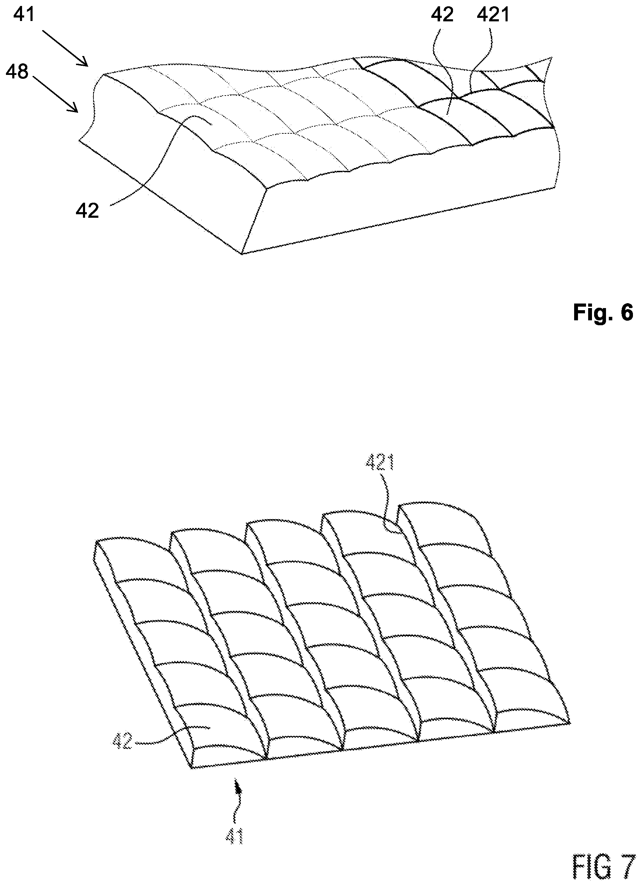

Fig.6 zeigt eine Mikrolinsenanordnung 41, bei der die Mikrolinsen 42 eine rechteckige Grundfläche aufweisen und zentriert angeordnet sind. Die Mikrolinsenanordnung 41 ist hier einstückig mit einem Grundkörper 48 ausgeführt. Die Mikrolinsen 42 stoßen jeweils an Kontaktlinien 421 aneinander an. Die jeweils eine Mikrolinse 42 umrahmenden Kontaktlinien 421 bilden in Draufsicht ein Rechteck. Die Mikrolinsen 42 haben somit eine rechteckige Apertur. Die unterhalb des Grundkörpers 48 befindliche Lochmaske 43 ist hier nicht dargestellt. Ihre Löcher 44 befinden sich in Draufsicht im Mittelpunkt der jeweiligen Mikrolinse 42, die somit zentriert ist.

Fig.7 zeigt eine Mikrolinsenanordnung 41, bei der die Mikrolinsen 42 eine rechteckige Grundfläche aufweisen und dezentriert angeordnet sind. Die Mikrolinsenanordnung 41 ist hier ohne Grundkörper 48 gezeigt. Die Mikrolinsen 42 stoßen jeweils an Kontaktlinien 421 aneinander an. Die jeweils eine Mikrolinse 42 umrahmenden Kontaktlinien 421 bilden in Draufsicht ein Rechteck. Die Mikrolinsen 42 haben somit eine rechteckige Apertur. Die unterhalb des Grundkörpers 48 befindliche Lochmaske 43 ist hier nicht dargestellt. Ihre Löcher 44 befinden sich in Draufsicht nicht im Mittelpunkt der rechteckigen Apertur der jeweiligen Mikrolinse 42. Die hier gezeigten Mikrolinsen 42 sind somit dezentriert.

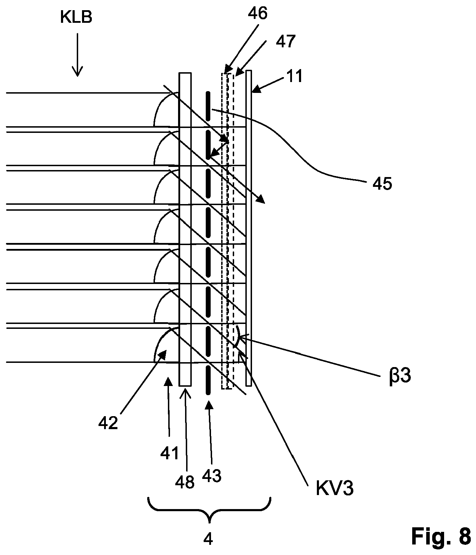

Fig.8 zeigt einen Polarisationsrecycler 4 mit dezentrierten Mikrolinsen 42. Der Polarisationsrecycler 4 weist eine Mikrolinsenanordnung 41 auf, die aus vielen Mikrolinsen 42 besteht. Die Mikrolinsen 42 sind als Sammellinsen ausgeführt und ähnlich dezentriert angeordnet wie zu Fig.7 gezeigt. Der Mikrolinsenanordnung 41 in Strahlrichtung nachgeordnet befindet sich eine Lochmaske 43. Diese ist auf ihrer der Mikrolinsenanordnung 41 abgewandten Seite 45 reflektierend ausgebildet. Der Lochmaske 43 in Strahlrichtung nachgeordnet befindet sich ein Retarder 46. Dem Retarder 46 in Strahlrichtung nachgeordnet befindet sich ein reflektiver Polarisator 47. Der Polarisationsrecycler 4 weist somit die Elemente Mikrolinsenanordnung 41, Lochmaske 43, Retarder 46 und reflektiver Polarisator 47 auf. Die Mikrolinsenanordnung 41 befindet sich auf einer ersten Grundfläche 481 eines Grundkörpers 48, auf dessen zweiter Grundfläche 482 die Lochmaske 43 angeordnet ist. Der Grundkörper 48 ist transparent und besteht vorzugsweise aus demselben Material wie die Mikrolinsen 42. In einer vorteilhaften Ausgestaltung sind die Mikrolinsen 42 einstückig mit dem Grundkörper 48 ausgeführt.

Man erkennt, daß die Mikrolinsen 42 der Mikrolinsenanordnung 41 lückenlos angeordnet sind. Jede der Mikrolinsen 42 wandelt die parallelen Eingangslichtstrahlen des auf sie treffenden kollimierten Lichtbündels KLB in Ausgangslichtstrahlen um, die eine kegelförmige Verteilung KV3 aufweisen. Die kegelförmige Verteilung KV3 hat einen Öffnungswinkel β3 und eine Ablenkung/Verkippung der Propagationsachse um einen vom Grad der Dezentrierung der Mikrolinsen 42 abhängigen Winkel. Die Eingangslichtstrahlen werden fokussiert, wobei die Fokusebene der Ausgangslichtstrahlen in der Ebene der Lochmaske 43 liegt. Die Ausgangslichtstrahlen passieren den Retarder 46. Da die Ausgangslichtstrahlen wie auch die Eingangslichtstrahlen keine bevorzugte Polarisation aufweisen, weisen sie auch nach Durchlaufen des Retarders 46 keine bevorzugte Polarisation auf. Beim Auftreffen auf den reflektiven Polarisator 47 passiert diesen nur derjenige Anteil, der entsprechend dem reflektiven Polarisator 47 ausgerichtet ist, während der senkrecht dazu polarisierte Anteil reflektiert wird. Der reflektierte Anteil passiert den Retarder 46, wird von der reflektierenden Seite 45 der Lochmaske 43 reflektiert und passiert den Retarder 46 erneut. Nach diesem zweimaligen Durchlaufen des Retarders 46 ist die Polarisationsrichtung um 90° gedreht, sodaß der reflektive Polarisator 47 nun passiert wird. Somit wird das ursprünglich vom reflektiven Polarisator 47 reflektierte Licht bis auf den Anteil, der auf die Löcher 44 der Lochmaske 43 trifft, in seiner Polarisation gedreht und polarisationsrichtig dem Anzeigepanel 11 zugeführt. Dieses ist ein für linearpolarisiertes Licht vorgesehenes Anzeigepanel 11, beispielsweise eine Flüssigkristallanzeige (LCD: Liquid Crystal Display). Das Strahlenbündel, welches das Anzeigepanel 11 in der Abbildung nach rechts verläßt, weist die von den Mikrolinsen 42 vorgegebene kegelförmige Verteilung KV3 auf. Die Transmissionsachse des reflektiven Polarisators ist dabei so ausgerichtete, daß die Polarisation des transmittierten Lichts auf die Polarisationsachse des Anzeigepanels 11 ausgerichtet ist. Reflektiert wird Licht der entsprechend senkrechten Polarisation.

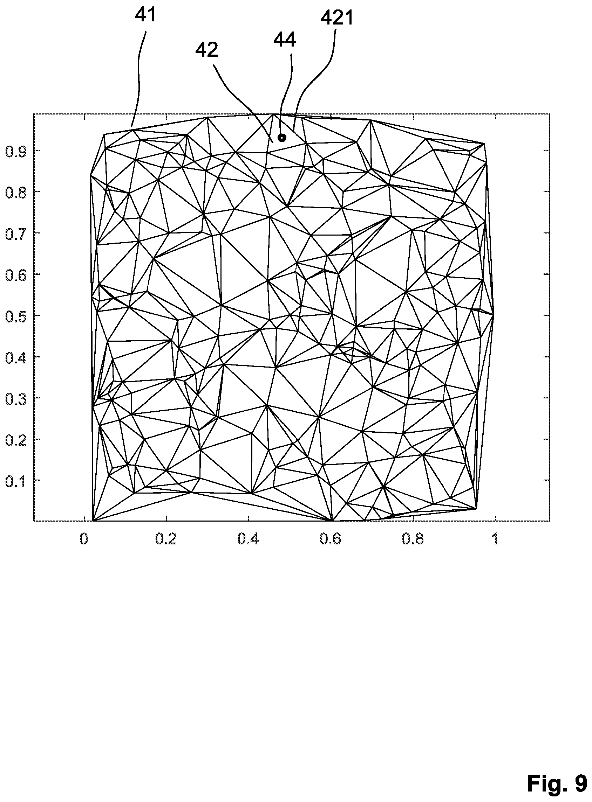

Fig.9 zeigt eine Mikrolinsenanordnung 41 mit unregelmäßiger Struktur in Draufsicht. Die Mikrolinsen 42 weisen jeweils eine dreieckige Grundfläche auf, und sind von dreieckig angeordneten Kontaktlinien 421 umgeben. Im Mittelpunkt einer beispielhaft herausgegriffenen Mikrolinse 42 ist ein Kreis eingezeichnet, der andeutet, an welcher Stelle - hier unterhalb der Zeichenebene - sich ihr Brennpunkt befindet, und wo sich ein Loch 44 der erfindungsgemäß angeordneten Lochmaske befindet. In der hier gezeigten Mikrolinsenanordnung 41 sind viele solche Mikrolinsen 42 mit unregelmäßiger dreieckiger Aperturfläche und gleichen optischen Eigenschaften unregelmäßig verteilt angeordnet. Ihre Anordnung entspricht einer unregelmäßigen Struktur, in der die Löcher 44 der Lochmaske 43 angeordnet sind. Der Übersichtlichkeit halber ist hier nur eines der Löcher 44 angedeutet. Jedem der Löcher 44 ist eine Mikrolinse 42 zugeordnet. Im Idealfall stellt die Anordnung der Löcher 44 eine Zufallsverteilung dar.

Die Abbildung zeigt eine Mikrolinsenanordnung 41 mit zufällig verteilten Mikrolinsen 42 mit dreieckiger Apertur. Auch andere Aperturen, die eine vollflächige Abdeckung ermöglichen, sind hier sinnvoll einsetzbar, beispielsweise viereckige, sechseckige oder allgemein n-eckige mit n=3,4,5,.... oder Kombinationen daraus.

Die Strahlengänge in einer Schnittdarstellung sehen dabei ähnlich den zu Fig.8 gezeigten aus, allerdings mit zufälliger Abmessung. Jedes aus drei Kontaktlinien 421 gebildete Dreieck weist immer noch eine gekrümmte Linsenoberfläche auf, sodaß alle parallelen Lichtstrahlen, die darauf treffen, in einem Fokuspunkt zusammenkommen. Lediglich die Lage der Fokuspunkte und damit die Lage der Löcher 44, folgt nun der Verteilung dieser Dreiecke.

Da alle Fokuspunkte in der Ebene der Lochmaske 43 liegen, gibt es an den Kontaktlinien 421 zwischen zwei Mikrolinsen 42 Sprünge zwischen den einzelnen Dreiecken, da die Linsenoberflächen hier ja zufällig beschnitten werden und nicht auf die Nachbarelemente abgestimmt sind. Da aber jedes Element auf die gleiche Linsenoberfläche aufbaut, sollte der Scheitelpunkt der Linsen immer auf der gleichen Höhe sein, sofern er innerhalb des jeweiligen Dreiecks liegt. Die Aperturen sind hier dreieckig, ansonsten aber "zufällig" bezüglich Größe und Orientierung. N-Ecke mit N=3,4,5,... sind hier genauso möglich. Auch eine Mischung von N-Ecken mit unterschiedlichen Werten von N. Auch können gekrümmte Begrenzungen, also gekrümmte Kontaktlinien 421 sind hier nicht ausgeschlossen, obwohl sie eventuell schwierig zu fertigen sind.

Kernstück der Erfindung ist ein Mikrolinsenarray, die Mikrolinsenanordnung 41, aus Sammellinsen, den Mikrolinsen 42. Die Mikrolinsenanordnung 41 erzeugt aus parallelem Licht der Beleuchtung die gewünschte Winkelverteilung mit dem Öffnungswinkel β. Über Form und Apertur der Linsenoberfläche lassen sich neben dem Öffnungswinkel auch viele weitere Eigenschaften der Lichtverteilung definieren, wie z.B. die Intensitätsverteilung für verschiedene Winkelbereiche. Die Sammellinsen bündeln das Licht so, daß in einem kurzen Abstand A zur Mikrolinse 42 ein Array aus Fokuspunkten entsteht. Bringt man die Mikrolinsen 42 auf der Unterseite einer Folie, hier des Grundkörpers 48, auf und wählt die Linsenparameter entsprechend, kann der Fokuspunkt einer jeden Mikrolinse in der Nähe der zweiten Grundfläche 482, der Oberfläche der Folie, plaziert werden. Die zweite Grundfläche 482, also die Oberseite der Folie, ist in allen Bereichen, in denen sich kein Fokuspunkt befindet, hochreflektiv beschichtet. Sie bildet also eine Art Lochmaske 43, durch die das Licht mit Hilfe der Mikrolinsen 42 hindurchgefädelt wird. Nach dem Passieren des Bauteils transmittiert das Licht zunächst durch eine Viertelwellenplatte, den Retarder 46. Dann wird von einem reflektivem Polarisator 47, die Polarisation, die vom Anzeigepanel 11 nicht verwendet wird, zurückreflektiert und trifft wieder auf die reflektierende Seite 45 der Lochmaske 43.

Da das Licht durch die vorherige Fokussierung sich nun divergent ausbreitet, wird der Durchmesser eines jeden Teilbündels KV beim erneuten Auftreffen auf die Lochmaske 43 stark verbreitert haben und größtenteils auf den beschichteten Teil der Lochmaske 43 treffen und wieder zurück Richtung Anzeigepanel 11 reflektiert. Der Abstand zwischen Lochmaske 43 und reflektivem Polarisator 47 ist in Abhängigkeit vom Öffnungswinkel β entsprechend so groß gewählt, dass das reflektierte Licht die Lochmaske 43 vollflächig ausleuchtet. Durch den doppelten Durchgang durch die Viertelwellenplatte (oder durch einen mehrfachen Durchgang bei einem anders als um eine Viertelwellenlänge verzögernden Retarder) ist die Polarisation nun so gedreht, daß das Licht den reflektiven Polarisator 47 passieren kann und trägt somit zur Gesamthelligkeit bei. Somit wird ein sehr kompakter Aufbau und eine Erhaltung der Winkelverteilung der Mikrolinsenanordnung 42 erzielt, und es sind keine aufwendigen Strahlteilerkomponenten erforderlich. Eine Effizienzsteigerung eines einem Head-Up-Display ähnlichen Displaysystems, bei dem die Winkelverteilung des Ausgangslichts sehr präzise kontrolliert werden soll, kann ebenfalls mittels einer erfindungsgemäßen Anzeigeeinrichtung erreicht werden.

Im Gegensatz zu einer bekannten Lösung, bei der von mehreren Lichtquellen kommende Eingangslichtstrahlen ungerichtet sind und durch Länge und Durchmesser von Bohrungen, die sie passieren, in Ausgangslichtstrahlen einer kegelförmigen Verteilung umgewandelt werden, ist es erfindungsgemäß vorgesehen, kollimierte bzw. parallele Eingangslichtstrahlen in Ausgangslichtstrahlen einer kegelförmigen Verteilung umzuwandeln. Die erfindungsgemäße Lösung ist somit besonders für ein geschlossenes Bündel von parallelem Licht geeignet, und funktioniert ohne die Querschnittsfläche des Lichts direkt zu vergrößern. Die Etendue vergrößert sich dabei natürlich schon. Bei weiterer Propagation vergrößert sich die Querschnittsfläche, aber da in den bevorzugten Ausführungsbeispielen direkt hinter dem Polarisationsrecycler 4 das Anzeigepanel 11 kommt, ist diese Vergrößerung zu vernachlässigen. Anders ausgedrückt: Das Polarisationsrecycling findet hier in der vorhandenen Fläche des Strahlbündels statt. Wenn man alternativ mit einem Strahlteiler arbeitet verdoppelt sich die Fläche, weil der einkommende Strahl in zwei Teilstrahlen aufgeteilt wird, die sich nicht wieder kombinieren lassen. Die Etendue ist eine physikalische Größe, die sich vereinfacht aus der Winkelverteilung an jedem Punk des Lichtbündels und dessen Querschnittsfläche ergibt. Ein Erhaltungssatz sagt, daß Etendue beim Durchgang durch ein optisches System immer nur gleich oder größer werden kann. In diesem Fall haben wir Eingangsstrahlen eines parallelen Lichtbündels KLB (Winkelverteilung ~0°) mit einer gewissen Querschnittsfläche und zugehöriger Etendue. Durch die Mikrolinsenanordnung 41 wird die der Divergenzwinkel vergrößert und dadurch erhöht sich die Etendue.

Damit das bekannte System effizient ist, müßte die Reflektion im unteren Teil, also unterhalb der Platte bei den Lichtquellen, sehr verlustfrei reflektierend sein, da ein Großteil des Lichts sehr viele Reflektionen brauchen wird, bis es durch die Bohrungen tritt. Die vorliegende Erfindung eignet sich insbesondere dazu, in ein schon bestehendes Lichtbündel Polarisationsrecycling zu integrieren.

Erfindungsgemäß wird die Lochmaske 43 durch eine reflektive Beschichtung mit darin vorhandenen Löchern gebildet. Bei einer bekannten Lösung sind dagegen längliche Bohrungen in einer dicken Platte vorhanden. Diese Platte weist eine reflektierende Beschichtung auf, die an den Stellen der Bohrungen nicht durchgehend ausgebildet ist, sondern die Bohrungen offen läßt.

Die Lösung gemäß der Erfindung hat unter anderem den Vorteil, durch die Mikrolinsenanordnung 41 fast beliebige Lichtverteilungen im Winkelraum erzeugen zu können und das mit dem Polarisationsrecycling effizient zu kombinieren.

## Patentansprüche

1. Anzeigeeinrichtung aufweisend ein Anzeigepanel (11) für linearpolarisiertes Licht, eine Lichtquelle (12) für unpolarisiertes Licht und einen Polarisationsrecycler (4), wobei der Polarisationsrecycler (4) im von der Lichtquelle (12) kommenden Strahlengang aufeinanderfolgend angeordnet aufweist:
- eine Mikrolinsenanordnung (41),
- eine Lochmaske (43), die auf ihrer der Mikrolinsenanordnung (41) abgewandten Seite reflektierend ausgebildet ist,
- einen Retarder (46), und
- einen reflektiven Polarisator (47),
wobei die Mikrolinsen (42) der Mikrolinsenanordnung (43) lückenlos angeordnet sind,
**dadurch gekennzeichnet, daß** die Lichtquelle (12) eine kollimierte Lichtquelle ist, und die Mikrolinsen (42) einfallendes Licht so fokussieren, daß dieses die Löcher der Lochmaske (43) passieren kann.

2. Anzeigeeinrichtung nach Anspruch 1, wobei die Mikrolinsen (42) der Mikrolinsenanordnung (41) parallele Eingangslichtstrahlen in Ausgangslichtstrahlen einer kegelförmigen Verteilung (KV,KV1,KV2) mit definiertem Öffnungswinkel (β, β1, β2) umwandeln.

3. Anzeigeeinrichtung nach einem der vorhergehenden Ansprüche, wobei die Mikrolinsenanordnung (41) einen Grundkörper (48) mit zwei im wesentlichen parallelen, in einem Abstand (A) zueinander angeordneten Grundflächen (481,482) aufweist, auf dessen einer Grundfläche (481) die Mikrolinsen (42) angeordnet sind, und auf dessen anderer Grundfläche (482) die Lochmaske (43) angeordnet ist.

4. Anzeigeeinrichtung nach einem der vorhergehenden Ansprüche, wobei die Lochmaske (43) in einer Fokusebene der Mikrolinsenanordnung (41) angeordnet ist.

5. Anzeigeeinrichtung nach einem der vorhergehenden Ansprüche, wobei die Lochmaske (43) als reflektive Beschichtung ausgebildet ist.

6. Anzeigeeinrichtung nach einem der vorhergehenden Ansprüche 3 bis 5, wobei der Grundkörper (48) als Folie ausgebildet ist.

7. Anzeigeeinrichtung nach einem der vorhergehenden Ansprüche, wobei diese einen transparenten Träger (49) mit zwei im wesentlichen parallelen, in einem Abstand (B2) zueinander angeordneten Grundflächen aufweist, auf dessen einer Grundfläche die Lochmaske (43) angeordnet ist, und auf dessen anderer Grundfläche der Retarder (47) angeordnet ist oder sowohl der Retarder (47) als auch der reflektive Polarisator (48).

8. Anzeigeeinrichtung nach einem der vorhergehenden Ansprüche, wobei die Mikrolinsen (42) der Mikrolinsenanordnung (41) eine rechteckige Apertur aufweisen.

9. Anzeigeeinrichtung nach einem der vorhergehenden Ansprüche, wobei die Mikrolinsen (42) der Mikrolinsenanordnung (41) dezentriert angeordnet sind.

10. Anzeigeeinrichtung nach einem der vorhergehenden Ansprüche, wobei die Lochmaske (43) Löcher (44) aufweist, die in einer unregelmäßigen Struktur angeordnet sind, und jedem dieser Löcher (44) eine Mikrolinse (42) zugeordnet ist.

11. Anzeigeeinrichtung nach einem der vorhergehenden Ansprüche, wobei der reflektive Polarisator (47) parallel zur Lochmaske (43) ausgerichtet ist, sodaß der reflektive Lichtanteil durch zweifachen Durchgang durch den Retarder (46) in der Polarisation gedreht und durch Reflektion an der Lochmaske (43) mit dem direkt transmittierten Teil am reflektiven Polarisator (47) überlagert wird.

## Claims

1. A display device having a display panel (11) for linearly polarised light, a light source (12) for unpolarised light, and a polarisation recycler (4), wherein, arranged consecutively in the optical path coming from the light source (12), the polarisation recycler (4) has:
- a microlens arrangement (41),
- a perforated mask (43) formed to be reflective on its side facing away from the microlens arrangement (41),
- a retarder (46), and
- a reflective polariser (47),
wherein the microlenses (42) of the microlens arrangement (43) are arranged without gaps,
**characterised in that** the light source (12) is a collimated light source and **in that** the microlenses (42) focus incident light such that it can pass through the holes in the perforated mask (43).

2. The display device according to claim 1, wherein the microlenses (42) of the microlens arrangement (41) convert parallel input light rays into output light rays of a conical distribution (KV, KV1, KV2) with a defined aperture angle (β, β1, β2).

3. The display device according to any one of the preceding claims, wherein the microlens arrangement (41) has a base body (48) with two substantially parallel base surfaces (481,482) arranged at a distance (A) from one another, on one base surface (481) of which the microlenses (42) are arranged and on the other base surface (482) of which the perforated mask (43) is arranged.

4. The display device according to any one of the preceding claims, wherein the perforated mask (43) is arranged in a focal plane of the microlens arrangement (41).

5. The display device according to any one of the preceding claims, wherein the perforated mask (43) is formed as a reflective coating.

6. The display device according to any one of the preceding claims 3 to 5, wherein the base body (48) is formed as a film.

7. The display device according to any one of the preceding claims, wherein the display device has a transparent carrier (49) with two substantially parallel base surfaces arranged at a distance (B2) from one another, on one base surface of which the perforated mask (43) is arranged and on the other base surface of which the retarder (47) or both the retarder (47) and the reflective polariser (48) are arranged.

8. The display device according to any one of the preceding claims, wherein the microlenses (42) of the microlens arrangement (41) have a rectangular aperture.

9. The display device according to any one of the preceding claims, wherein the microlenses (42) of the microlens arrangement (41) are arranged in an off-centre manner.

10. The display device according to any one of the preceding claims, wherein the perforated mask (43) has holes (44) which are arranged in an irregular structure, and each of these holes (44) is associated with a microlens (42).

11. The display device according to any one of the preceding claims, wherein the reflective polariser (47) is aligned parallel to the perforated mask (43), such that the reflective light component has the polarisation rotated by passing through the retarder (46) twice and is overlaid with the directly transmitted part on the reflective polariser (47) by reflection off the perforated mask (43).

## Revendications

1. Dispositif d'affichage comprenant un panneau d'affichage (11) pour une lumière polarisée linéairement, une source lumineuse (12) pour une lumière non polarisée et un recycleur de polarisation (4), dans lequel le recycleur de polarisation (4) présente, disposés successivement dans le trajet optique provenant de la source lumineuse (12) :
- un réseau de microlentilles (41),
- un masque à trous (43), qui est réalisé de manière réfléchissante sur son côté opposé au réseau de microlentilles (41),
- un retardateur (46), et
- un polariseur réfléchissant (47),
dans lequel les microlentilles (42) de l'agencement de microlentilles (43) sont disposées sans interstices,
**caractérisé en ce que** la source lumineuse (12) est une source lumineuse collimatée, et **en ce que** les microlentilles (42) focalisent la lumière incidente de sorte que celle-ci puisse traverser les trous du masque à trous (43).

2. Dispositif d'affichage selon la revendication 1, dans lequel les microlentilles (42) du réseau de microlentilles (41) transforment des rayons lumineux incidents parallèles en rayons lumineux émergents à distribution conique (KV, KV1, KV2) avec un angle d'ouverture défini (β, β1, β2).

3. Dispositif d'affichage selon l'une des revendications précédentes, dans lequel le réseau de microlentilles (41) présente un corps de base (48) comportant deux surfaces de base (481, 482) essentiellement parallèles, disposées à une distance (A) l'une de l'autre, les microlentilles (42) étant disposées sur l'une desdites surfaces de base (481) et le masque à trous (43) étant disposé sur l'autre surface de base (482).

4. Dispositif d'affichage selon l'une des revendications précédentes, dans lequel le masque à trous (43) est disposé dans un plan focal du réseau de microlentilles (41).

5. Dispositif d'affichage selon l'une des revendications précédentes, dans lequel le masque à trous (43) est réalisé sous la forme d'un revêtement réfléchissant.

6. Dispositif d'affichage selon l'une des revendications 3 à 5, dans lequel le corps de base (48) est réalisé sous la forme d'un film.

7. Dispositif d'affichage selon l'une des revendications précédentes, dans lequel celui-ci présente un support transparent (49) comportant deux surfaces de base essentiellement parallèles, disposées à une distance (B2) l'une de l'autre, le masque à trous (43) étant disposé sur l'une desdites surfaces de base, et le retardateur (47), ou bien à la fois le retardateur (47) et le polariseur réfléchissant (48), étant disposé(s) sur l'autre surface de base.

8. Dispositif d'affichage selon l'une des revendications précédentes, dans lequel les microlentilles (42) du réseau de microlentilles (41) présentent une ouverture rectangulaire.

9. Dispositif d'affichage selon l'une des revendications précédentes, dans lequel les microlentilles (42) du réseau de microlentilles (41) sont disposées de manière décentrée.

10. Dispositif d'affichage selon l'une des revendications précédentes, dans lequel le masque à trous (43) présente des trous (44) disposés selon une structure irrégulière, et une microlentille (42) est associée à chaque trou (44).

11. Dispositif d'affichage selon l'une des revendications précédentes, dans lequel le polariseur réfléchissant (47) est orienté parallèlement au masque à trous (43), de sorte que la composante lumineuse réfléchie est tournée en polarisation par un double passage à travers le retardateur (46) et est, par réflexion sur le masque à trous (43), superposée à la partie directement transmise au niveau du polariseur réfléchissant (47).
